Europäisches Patentamt

European Patent Office

Office européen des brevets

(19)

(11) Veröffentlichungsnummer: **0 199 067**

**A2**

(12) **EUROPÄISCHE PATENTANMELDUNG**

(21) Anmeldenummer: 86103461.9

(22) Anmeldetag: 14.03.86

(51) Int. Cl.⁴: **G 01 L 1/12**
**G 01 L 1/14, G 01 L 5/13**

(30) Priorität: 26.04.85 DE 3515125

(43) Veröffentlichungstag der Anmeldung:
29.10.86 Patentblatt 86/44

(84) Benannte Vertragsstaaten:
DE FR GB IT

(71) Anmelder: ROBERT BOSCH GMBH
Postfach 50
D-7000 Stuttgart 1(DE)

(72) Erfinder: Dobler, Klaus, Dr.-Ing.
Bettäckerstrasse 12
D-7016 Gerlingen(DE)

(72) Erfinder: Hachtel, Hansjörg, Dipl.-Ing.
Buchenstrasse 4
D-7251 Weissach(DE)

(54) Kraftmesser zur Messung von Kräften in einem etwa bolzenartigen Bauelement.

(57) Bei einem Kraftmesser weist ein zweiseitig gelagertes Bauelement (17) eine biegeelastische Hülse (22) auf, in deren Längsbohrung (23) ein im Bereich einer Lagerstelle (16) einseitig fest eingespannter, starrer Meßstab (24) angeordnet ist. Mit seinem freien Ende (27), das parallele Oberflächen (36, 37) hat, erzeugt der Meßstab (24) im Bereich der anderen Lagerstelle (15) eine von der Zugkraft im Lenker (21) abhängige relative Lageänderung. Mit Hilfe von mit Wechselstrom durchflosenen Spulen (34, 35) wird diese Lageänderung in ein elektrisches Signal umgewandelt. Störende Einflüsse können durch eine Halbbrückenschaltung der Spulen (34, 35) kompensiert werden. Der Kraftmesser Arbeitet genau und hat eine hohe Betriebszuverlässigkeit.

EP 0 199 067 A2

R.19972
26.3.1985 Sf/Pi

0199067

ROBERT BOSCH GMBH, 7000 STUTTGART 1


Kraftmesser zur Messung von Kräften in einem etwa bolzenartigen Bauelement

Stand der Technik

Die Erfindung geht aus von einem Kraftmesser zur Messung von
Kräften in einem etwa bolzenartigen Bauelement nach der Gattung des Hauptanspruchs. Es wurde schon vorgeschlagen, die
Meßwerte mit Hilfe eines in einer Bohrung eines Biegestabs
angeordneten Meßstabs zu vergrößern und auf einen Wegaufnehmer zu übertragen. Der in Wirkverbindung mit dem Meßstab
stehende Wegaufnehmer ist aber störanfällig. Ferner ist er
mit dem Meßstab mechanisch gekoppelt, so daß bei Erschütterungen der Meßstab beschädigt werden kann und insbesondere
relativ kleine Wege nur schwer zu erfassen sind.

Ferner ist es bekannt, die Durchbiegung einer Vollwelle mit
Hilfe von Hall-Sensoren zu bestimmen. Hall-Sensoren weisen
aber eine nichtlineare Kennlinie (Spannung über Druck) auf,
so daß eine aufwendige Auswerteschaltung notwendig ist. Ausserdem sind die Hall-Sensoren außerhalb der Welle angeordnet
und dadurch schmutzempfindlich.

...

## Vorteile der Erfindung

Der erfindungsgemäße Kraftmesser mit den kennzeichnenden
Merkmalen des Hauptanspruchs hat demgegenüber den Vorteil,
daß er besonders einfach, kompakt und robust baut. Der
Meßstab und der Wegaufnehmer sind nicht mechanisch miteinander verbunden, wodurch der Kraftmesser besonders für den
rauhen Einsatz in der Landwirtschaft geeignet ist. Ferner
ist der Wegaufnehmer vor Verschmutzung geschützt in einem
Gehäuse angeordnet. Es sind auch relativ kleine Wege genau
bestimmbar.

Durch die in den Unteransprüchen aufgeführten Maßnahmen
sind vorteilhafte Weiterbildungen und Verbesserungen der
im Hauptanspruch angegebenen Merkmale möglich.

## Zeichnung

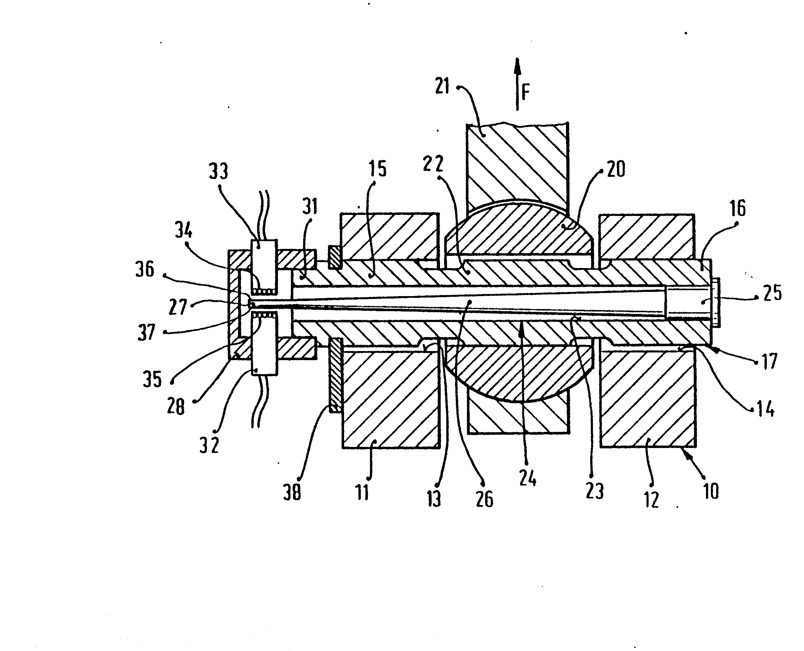

Ein Ausführungsbeispiel der Erfindung ist in der Zeichnung
dargestellt und in der nachfolgenden Beschreibung näher erläutert. Die einzige Figur zeigt einen Längsschnitt durch
einen Kraftmesser in vereinfachter Darstellung.

## Beschreibung des Ausführungsbeispiels

An einem nicht näher dargestellten, mehrteiligen Schleppergehäuse 10 sind zwei Schenkel 11, 12 ausgebildet, die je
eine Lagerbohrung 13, 14 aufweisen. In diesen sind die Enden 15, 16 eines bolzenartigen, torsionsfesten Bauelements
17 eines Kraftmessers reibungsarm gelagert. Zwischen den
beiden Lagerbohrungen 13, 14, d.h. zwischen den Schenkeln
11, 12, liegt die Kugelhülse 20 eines am Schleppergehäuse
10 schwenkbar gelagerten Unterlenkers 21.

...

Das Bauelement 17 ist eine rohrförmige Hülse 22, in deren durchgehender mittiger Längsbohrung 23 ein Meßstab 24 angeordnet ist. Die Hülse 22 bildet hierbei das federnde, biegeelastische Bauteil und besteht zu diesem Zweck aus einem geeigneten Material, das neben hoher Festigkeit auch eine geeignete Elastizität aufweist, wie z.B. Stahl. Die Hülse 22 ist dabei mit so viel Spiel in den beiden Lagerbohrungen 13, 14 und in der Kugelhülse 20 gelagert, daß bei ihrer Durchbiegung unter Einwirkung der über den Unterlenker 21 angreifenden Zugkraft der Belastungsfall eines zweiseitig frei aufliegenden Trägers gilt.

In der Längsbohrung 23 ist ein Meßstab 24 angeordnet, der das nicht biegeelastische Bauteil darstellt, das bei einer Durchbiegung der Hülse 22 seine starre Form beibehält. Der Meßstab 24 weist an seinem einen Ende einen kurzen zylindrischen Abschnitt 25 auf, mit dem er in der Längsbohrung 23 an deren Ende fest eingespannt ist. Der Meßstab 24 besteht vorzugsweise aus elektrisch leitfähigem Werkstoff. Die Einspannstelle liegt am Ende der Biegelinie, so daß die Verformung der Hülse 22 voll ausgenutzt werden kann. Ausgehend vom zylindrischen Abschnitt 25 hat der Meßstab 24 einen sich stetig verjüngenden konischen Abschnitt 26, der mit seinem freien Ende 27 aus der Längsbohrung 23 am anderen Ende der Hülse 22 hinaus in ein topfförmiges Gehäuse 28 ragt. Dieses ist auf einer bundartigen Verlängerung 31 der Hülse 22 befestigt. Im Gehäuse 28 sind zwei Abstandssensoren 32, 33 angeordnet, zwischen denen das freie Ende 27 des Meßstabs 24 liegt; sie ermitteln den Hub des freien Endes 27 des Meßstabs 24. Jeder Abstandssensor 32, 33 weist eine Spule 34 bzw. 35 auf, deren Achsen senkrecht zum Meßstab 24 ausgerichtet sind und die ein- oder mehrlagig gewickelt und in einer Halbbrückenschaltung verschaltet sind. Im Bereich der Spulen 34, 35 weist der Meßstab 24 an seinem freien Ende 27 zwei parallele Oberflächen 36, 37 auf, die senkrecht zur im

... -

Unterlenker 21 angreifenden Kraftrichtung ausgebildet und den
Spulen 34, 35 zugewandt sind.

Die axiale Lage des Bauelements 17 in den Lagerbohrungen 13,
14 ist durch ein am Schenkel 11 befestigtes Halteblech 38
festgelegt. Es kann zusätzlich auch die Drehlage des Bauelements 17 absichern. Der Meßstab 24 bildet infolge seiner Ausbildung und Anordnung in der Hülse 22 einen einseitig fest eingespannten Freiträger, dessen Einspannstelle
am zylindrischen Abschnitt 25 und dessen Signalabgriff am
freien Ende 27 möglichst weit auseinanderliegen und deswegen insbesondere bezüglich des Signalabgriffs am freien
Ende 27 außerhalb der Lagerbohrung 13 liegt und nicht zwischen den Lagerbohrungen 13, 14.

Die im Unterlenker 21 auftretenden Zugkräfte werden von der
Hülse 22 des Bauelements 17 auf die beiden Schenkel 11, 12
und die Lagerbohrungen 13, 14 verteilt. Dabei wird die Hülse
22 durchgebogen; im Bereich der Einspannstelle des zylindrischen Abschnitts 25 behält der Meßstab 24 seine Lage zur
Hülse 22 bei. Da aber auf das freie Ende 27 des Meßstabs 24
keine Kräfte wirken, bleibt dieser in seiner geraden Form.
Durch die parallelen Oberflächen 36, 37 an dem freien Ende
27, die den jeweiligen Spulen 24, 25 zugewandt sind und
senkrecht zur Kraftrichtung verlaufen, können auch keine
störenden Kraftkomponenten auftreten. Da die Abstandssensoren 32, 33 mit Hilfe des Gehäuses 28 fest am Ende der Hülse
22 angeordnet sind, wird der Abstand zwischen dem Meßstab
24 und der Spule 34 verkleinert, während der Abstand zwischen dem Meßstab 24 und der anderen Spule 35 um denselben
Betrag vergrößert wird.

Werden die Spulen 34, 35 von einem hochfrequenten Wechselstrom durchflossen, so werden bei elektrisch leitendem Material des Meßstabs 24 in dessen Oberfläche Wirbelströme

...

erzeugt. Wird nun der Abstand zwischen dem freien Ende 27 des Meßstabs 24 und den Spulen 34, 35 verkleinert bzw. vergrößert, so ändern sich auch die erzeugten Wirbelströme, d.h. je näher die Spule 34 am Meßstab 24 ist, desto mehr Wirbelströme werden in dessen Oberfläche erzeugt. Dadurch wird Energie der Spule 34 entzogen, so daß die Spannung absinkt und der sogenannte Scheinwiderstand dadurch kleiner wird. Andererseits wird aber bei der zweiten Spule 35 der Abstand um denselben Betrag vergrößert, so daß in dieser Spule 35 derselbe Effekt, aber mit umgekehrten Vorzeichen eintritt. Sind die beiden Spulen 34, 35 nun in einer Halbbrückenschaltung miteinander verschaltet, so addieren sich beide Meßsignale. Gleichzeitig kompensieren sich aber durch diese Schaltung gleichsinnige Störeinflüsse, die durch Temperatur, elektrische oder magnetische Störfelder hervorgerufen werden. Man erhält besonders genaue Meßsignale mit geringen Meßfehlern. Der Meßstab 24 braucht nur im Bereich der beiden Spulen 34, 35 eine elektrisch leitende Oberfläche aufzuweisen. Ferner werden durch die parallelen Oberflächen 36, 37 des Meßstabs 24 störende Kraftkomponenten der anliegenden Zugkraft verhindert.

Besteht der Meßstab 24 aus ferromagnetischem Material, so kann auch induktiv der Abstand zu den Spulen gemessen werden. Werden die Spulen 34, 35 wieder von einem Wechselstrom durchflossen, so werden durch die elektrischen Felder der beiden Spulen 34, 35 die Molekularmagnete des ferromagnetischen Materials des Meßstabs 24 ständig in ihrer Richtung umgedreht. Dadurch wird das Magnetfeld verstärkt oder verkleinert. Wieder ist dies davon abhängig, ob der Abstand verkleinert oder vergrößert wird. Durch die Verkleinerung, d.h. Verstärkung des Magnetfeldes wird die Selbstinduktion der Spule erhöht, d.h. der Scheinwiderstand wird erhöht. Je kleiner somit der Abstand ist, desto größer wird der Scheinwiderstand. Bei Verkleinerung des Magnetfeldes wird entsprechend der Scheinwiderstand verkleinert. Sind die Spulen 34, 35 wieder in ei-

...

ner Halbbrückenschaltung verschaltet, so ergeben sich wieder dieselben vorteilhaften Effekte wie bei der oben beschriebenen Wirbelstromerzeugung. Die beiden Meßsignale addieren sich, und gleichsinnige Störeinflüsse werden kompensiert.

In beiden Fällen genügt es, dünne Schichten des ferromagnetischen bzw. des nicht ferromagnetischen Materials auf der Oberfläche des Meßstabs 24 im Bereich der Spulen 34, 35 anzubringen. Es können hierzu auch dünne Folien oder Bleche verwendet werden, oder es ist auch möglich, eine dünne Beschichtung mit Hilfe bekannter chemischer Verfahren, z.B. durch Galvanisieren aufzubringen. Der Meßstab selbst kann somit aus nahezu beliebigem Material hergestellt werden.

Selbstverständlich sind mit dem Kraftmesser auch Druckkräfte zu messen. Ferner ist es auch möglich, das Bauelement 17 einseitig gelagert auszubilden. -

R. 19972
26.3.1985 Sf/Pi

ROBERT BOSCH GMBH, 7000 STUTTGART 1

Ansprüche

1. Kraftmesser zur Messung von Kräften in einem etwa bolzenartigen, hohlen, biegeelastischen Bauelement (17), das Teil einer Steuereinrichtung eines Hubwerks von landwirtschaftlichen Arbeitsfahrzeugen ist, und in wenigstens einer gehäusefesten Lagerstelle (13, 14) gelagert ist und in seinem Innern (23) einen nicht biegeelastischen Meßstab (24) aufweist, der sich im wesentlichen zwischen den beiden Enden des Bauelements (17) erstreckt, und wobei ein Ende (25) des Meßstabs (24) am Bauelement (17) befestigt ist und das andere Ende (27) frei beweglich ist, dadurch gekennzeichnet, daß das freie Ende (27) des Meßstabs (24) mindestens in diesem Bereich aus elektrisch leitendem Material besteht, das mit mindestens einer von einem Wechselstrom durchflossenen Spule (34), die in einer radialen Ebene angeordnet ist, in Wirkverbindung steht.

2. Kraftmesser nach Anspruch 1, dadurch gekennzeichnet, daß der Meßstab (24) wenigstens im Bereich des freien Endes (27) aus ferromagnetischem Material besteht.

3. Kraftmesser nach Anspruch 1, dadurch gekennzeichnet, daß der Meßstab (24) am freien Ende (27) wenigstens im Bereich der Spule (34) von einer ferromagnetischen Schicht überzogen ist.

...

4. Kraftmesser nach Anspruch 1, dadurch gekennzeichnet, daß der Meßstab (24) wenigstens im Bereich seines freien Endes (27) aus nicht ferromagnetischem Material besteht.

5. Kraftmesser nach Anspruch 1, dadurch gekennzeichnet, daß der Meßstab (24) am freien Ende (27) wenigstens im Bereich der Spule (34) von einer nicht ferromagnetischen Schicht überzogen ist.

6. Kraftmesser nach einem der Ansprüche 1 bis 5, dadurch gekennzeichnet, daß das freie Ende (27) des Meßstabs (24) den Spulen (34, 35) zugewandte, parallele Oberflächen (36, 37) aufweist, die senkrecht zur angreifenden Kraft ausgebildet sind.

7. Kraftmesser nach einem der Ansprüche 1 bis 6, dadurch gekennzeichnet, daß das freie Ende (27) des Meßstabs (24) wenigstens mit dem Bereich der parallelen Oberflächen (36, 37) über das Bauelement (17) hinausragt und daß die Spulen (34, 35) sich in einem am Bauelement (17) angeflanschten Gehäuse (28) befinden.

8. Kraftmesser nach einem der Ansprüche 1 bis 6, dadurch gekennzeichnet, daß die Spulen (34, 35) im Bauelement (17) im Bereich des freien Endes (27) des Meßstabs (24) angeordnet sind.

9. Kraftmesser nach einem der Ansprüche 1 bis 8, dadurch gekennzeichnet, daß die Spulen (34, 35) in einer Halbbrückenschaltung verschaltet sind.

10. Kraftmesser nach einem der Ansprüche 1 bis 9, dadurch gekennzeichnet, daß das Bauelement (17) des Kraftmessers in bezug auf die beiden Lagerstellen (13, 14) als zweiseitig frei aufliegender Träger ausgebildet ist.